# EUROPEAN PATENT SPECIFICATION

(11) **EP 4 115 968 B1**
(45) Date of publication and mention of the grant of the patent: **31.01.2024**
(21) Application number: 22181744.8
(22) Date of filing: 29.06.2022
(51) Int. Cl.: B01D 46/00, B01D 46/10, B01D 46/42, B01D 46/52

(54) **AN ASSEMBLY INCLUDING A FILTERING ELEMENT AND A COVER PROVIDED WITH AN INSPECTION HOLE**
BAUGRUPPE MIT EINEM FILTERELEMENT UND EINEM MIT EINER INSPEKTIONSÖFFNUNG VERSEHENEN DECKEL
ENSEMBLE COMPRENANT UN ÉLÉMENT FILTRANT ET UN COUVERCLE MUNI D'UN TROU D'INSPECTION

(30) Priority: 06.07.2021 IT 202100017729
(43) Date of publication of application: 11.01.2023
(73) Proprietor: DENSO THERMAL SYSTEMS S.p.A., 10046 Poirino (Torino) (IT)
(72) Inventor: GIGLIOTTI, Paolo, I-10046 POIRINO (Torino) (IT); CREPALDI, Luca, I-10046 POIRINO (Torino) (IT); CARBONE, Andrea, I-10046 POIRINO (Torino) (IT)
(74) Representative: Vanzini, Christian

(56) References cited:
- EP-A1- 3 646 933
- DE-A1-102008 013 501
- DE-A1-102009 035 979
- KR-Y1- 200 342 474

## Description

This invention relates to an assembly including
a filtering element comprising a zigzag-folded filtering web that ends at the front with an end panel, and
a cover configured to be removably fixed to a filter housing adapted to receive the filtering element, said cover comprising a wall adapted to be placed in front of and in contact with the end panel of the filtering element.

Filtering elements which are formed by a zigzag-folded filtering web and made in particular of non-woven fabric are produced for a wide range of applications. For example, these filtering elements are used to filter fresh air for the cabin of motor vehicles or in air conditioning systems for rooms. In motor vehicles, filtering elements of this type are inserted into housings such as frames or boxes.

One known problem relates to the difficulty in understanding whether the filtering element is present in an air conditioning unit after the compartment containing it has been inserted and closed. In fact, in some situations, the filtering element may be missing after the cover of the filter compartment has been closed, as a result of assembly workers missing out the required operation.

Once closed by its cover, the compartment in which the air filter is intended to be contained is completely sealed, and it is no longer possible to inspect said compartment except by removing the cover.

KR 200342474 Y1 discloses an assembly according to the preamble of claim 1.

The object of this invention is to provide a solution that solves the disadvantages described above.

In view of this object, the invention relates to an assembly having the features defined in claim 1. In particular, an inspection hole is formed on the wall of the cover to allow the presence of the filtering element to be detected, the cover further comprising a plug for closing the inspection hole.

In a production line, by means of the assembly according to the invention, it will be easier to detect the presence of the contained filtering element once the cover that closes the filter compartment has been shut. By using, for example, a presence sensor or detector, it is thus possible to confirm that the filtering element is correctly installed, and authorize the assembly line to advance to the next station. In this case, the inspection hole is closed by the relevant plug.

The invention completely eliminates, with certainty, all of the cases where, at the end of the assembly line or after the product has been sold to the client, it has not been promptly identified that there is no filtering element in the air conditioning unit, which would subsequently result in rework at the end of the line or even damage to the final product if it has been sold.

The invention is therefore effective in monitoring and detecting human error in the assembly of an automotive component that is difficult to assemble in an automated manner, such as an air filter. This is because otherwise it would not be possible to verify the presence of a particular component that is not visible after assembly.

Further features and advantages of the assembly according to the invention will become clearer from the following detailed description of an embodiment of the invention, made with reference to the accompanying drawings, provided purely for illustrative and non-limiting purposes, in which:
Fig. 1 is a perspective view of an assembly comprising a cover assembled to a filtering element;
Fig. 2 is a cut-away view of the assembly in Fig. 1, taken along the line II-II;
Fig. 3 is an enlarged view of a detail in Fig. 2 that is shown by the arrow III;
Fig. 4 is a plan view of the cover;
Fig. 5 is a sectional view of the cover in Fig. 4, taken along the line V-V;
Fig. 6 is a further perspective view of the assembly comprising a cover assembled to a filtering element; and
Fig. 7 is a sectional view of the assembly in Fig. 6.

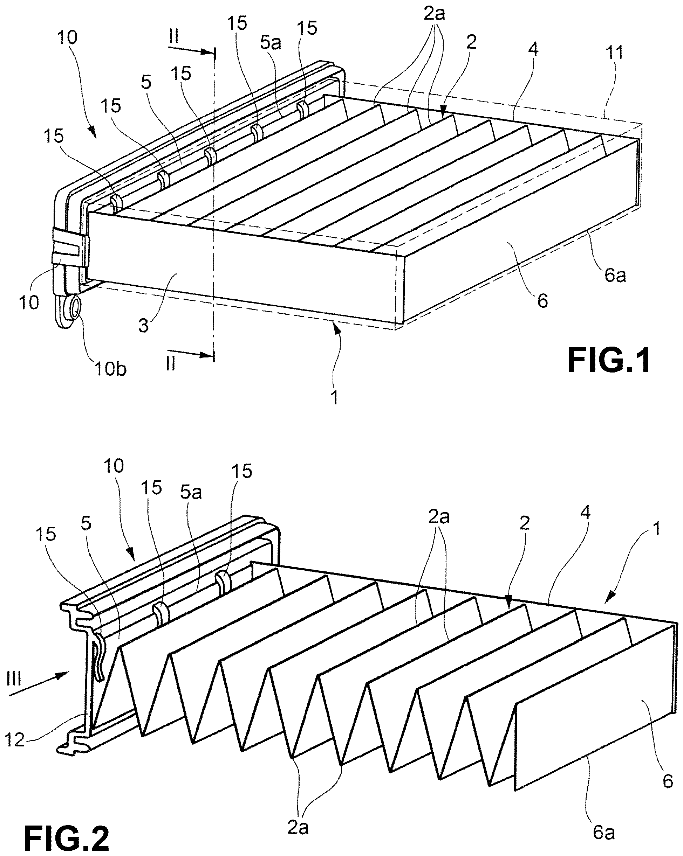

Fig. 1 and 2 show a filtering element 1 comprising a zigzag-folded filtering web 2. The filtering element 1 is substantially slab-shaped and also comprises two opposing sides or lateral strips 3 and 4 which are made from the same material as the filtering web 2 and joined thereto. The material of the filtering element may comprise, for example, a non-woven fabric, and may comprise a single layer or a plurality of layers coupled to one another.

At its opposite ends, the filtering web 2 comprises two end panels 5 and 6 which delimit the filtering web 2 in the longitudinal direction. For the purposes of this description, "longitudinal direction" is understood to mean the direction orthogonal to the fold lines 2a of the filtering web 2. Each end panel 5, 6 ends with a free edge 5a, 6a which extends, according to a plan view, approximately parallel to the fold lines 2a.

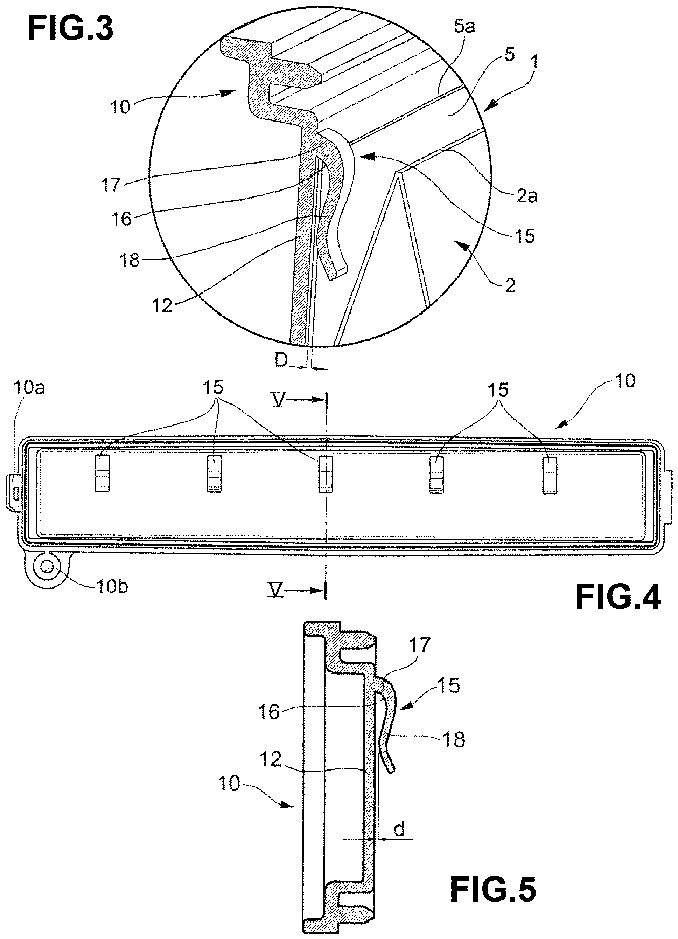

With reference also to Fig. 3 to 5, a cover 10 is shown which is configured to be removably fixed to a filter housing 11 adapted to receive the filtering element 1, which housing is only shown schematically by a dashed line in Fig. 1.

The cover 10 may be an element formed as a single piece of plastics material. A seal (not shown) may conventionally be provided on the cover 10, in order to sealingly close the cover 10 on a mouth of the filter housing 11. Moreover, the cover 10 may conventionally be provided with fixing means, for example snap-fit coupling members 10a or holes 10b for screws, which are provided in order to fix the cover 10 at the mouth of the filter housing 11. The filter housing 11 may be a frame or a box, for example, and is designed to allow a flow of fluid, for example air, to pass through the filtering element 1 in a direction approximately orthogonal to the fold lines 2a.

The cover 10 comprises a wall 12 which is adapted to be placed in front of and in contact with one of the end panels 5 of the filtering element 1. At least one holding formation 15 (in the example, a plurality of holding formations) is formed on this wall 12, which formation is adapted to be coupled to the end panel 5 of the filtering element 1 in order to hold the filtering element 1 against the wall 12 of the cover 10. One particular holding formation will be described in the following, but it is understood that the invention is not limited thereto. According to one embodiment, the cover may not have a holding formation for holding the filtering element.

The holding formations 15 are preferably formed as a single piece with the wall 12 of the cover 10. According to alternative embodiments that are less preferable, the holding formations may be pieces that are produced separately from the cover 10 and then permanently fixed thereto, for example glued or welded thereto.

With particular reference to Fig. 3 and 5, each holding formation 15 defines a slot 16 positioned between the wall 12 of the cover 10 and the holding formation 15, which slot is adapted to receive the end panel 5 of the filtering element 1. In the example shown, each holding formation 15 comprises a foot 17 which projects from the wall 12 and a holding arm 18 which extends from the foot 17 in a main direction that is approximately parallel to the wall 12.

Each holding formation 15 is formed as an elastically deformable clip that is configured to exert an elastic holding force on the end panel 5 of the filtering element 1. For this purpose, the slot 16 has to have a minimum width d that is less than the thickness D of the end panel 5 of the filtering element 1.

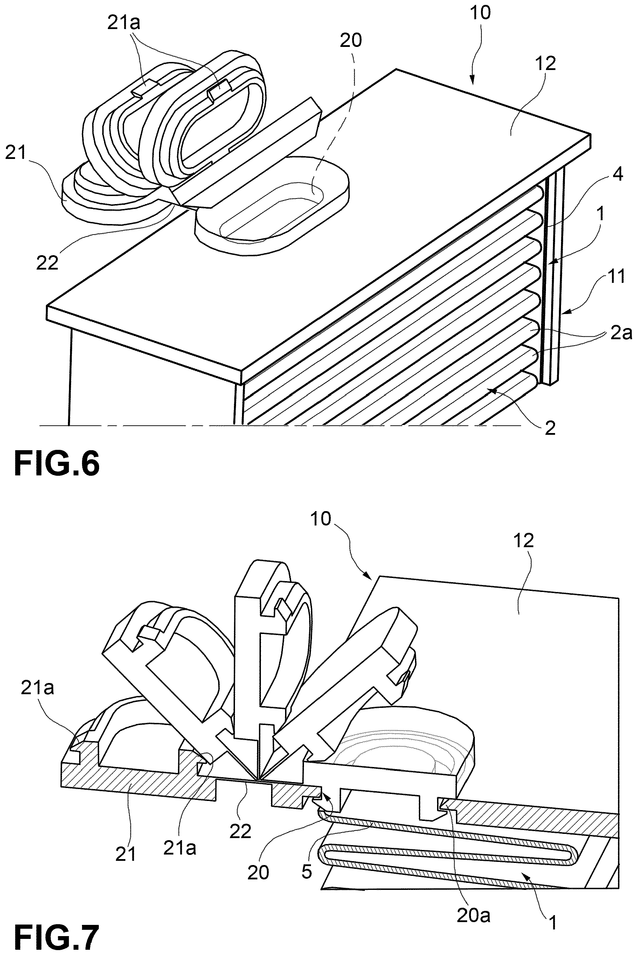

With reference to Fig. 6 and 7, the cover 10 is shown in a simplified manner. An inspection hole 20 is formed on the wall 12 of the cover 10, which inspection hole passes through the wall 12 and is intended to allow the presence of the filtering element 1 to be detected. The cover 10 also comprises a plug 21 for closing the inspection hole 20. The plug 21 is formed as a single piece of plastics material with the wall 12 of the cover 10, for example by means of molding. The plug 21 is preferably connected to the wall 12 of the cover 10 by means of a living hinge 22. In Fig. 6 and 7, the plug 21 is shown both in a closed position in which it closes the inspection hole 20 and in various open positions allowed by the living hinge 22. In general, it is preferable for the plug 21 to remain connected to the wall 12 of the cover 10 even when the plug is in an open position, so as to allow easy handling of the component.

In the example shown, in the closed position, the plug 21 closes onto the inspection hole 20 in a snap-fit manner, as a result of the presence of teeth 21a which engage the edge 20a of the inspection hole 20.

In an assembly line, the plug 21 is left open until the operation to check the presence of the filtering element 1 has been completed. Once this operation has been finished successfully, the plug 21 is closed.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. An assembly including
a filtering element (1) and
a cover (10) configured to be removably fixed to a filter housing (11) adapted to receive the filtering element (1), said cover comprising a wall (12),
wherein an inspection hole (20) is formed on said wall (12) to allow the presence of the filtering element (1) to be detected, the cover (10) further comprising a plug (21) for closing the inspection hole (20),
the assembly being **characterized in that** the filtering element (1) comprises a zigzag folded filtering web (2) that ends at the front with an end panel (5), wherein the wall (12) of the cover (10) is adapted to be placed in front of and in contact with the end panel (5) of the filtering element (1), and wherein the plug (21) is formed as a single piece of plastics material with the wall (12) of the cover (10).

2. The assembly according to claim 1, wherein the plug (21) is connected to the wall (12) of the cover (10) by means of a living hinge (22).

3. The assembly according to any of the preceding claims, wherein at least one holding formation (15) is formed on said wall (12), which formation is adapted to be coupled to the end panel (5) of the filtering element (1) to hold the filtering element (1) against the wall (12) of the cover (10).

4. The assembly according to claim 3, wherein said at least one holding formation (15) defines a slot (16) positioned between the wall (12) of the cover (10) and the holding formation (15),
wherein the slot (16) is adapted to receive a free edge (5a) of the end panel (5) of the filtering element (1), the slot (16) having a minimum width (d) less than the thickness (D) of the end panel (5) of the filtering element (1),
wherein said at least one holding formation (15) is formed as an elastically deformable clip configured to exert an elastic holding force on the end panel (5) of the filtering element (1).

5. The assembly according to claim 4, wherein said at least one holding formation (15) is formed as a single piece of plastics material with the wall (12) of the cover (10).

## Patentansprüche

1. Vorrichtung, aufweisend
ein Filterelement (1) und
eine Abdeckung (10), die so ausgestaltet ist, dass sie abnehmbar an einem zur Aufnahme des Filterelements (1) geeigneten Filtergehäuse (11) befestigt ist, wobei die Abdeckung eine Wand (12) aufweist,
wobei an der Wand (12) eine Kontrollöffnung (20) ausgebildet ist, um das Vorhandensein des Filterelements (1) zu ermitteln, wobei die Abdeckung (10) weiter einen Stopfen (21) zum Verschließen der Kontrollöffnung (20) aufweist,
wobei die Vorrichtung **dadurch gekennzeichnet ist, dass** das Filterelement (1) ein zickzackförmig gefaltetes Filtergewebe (2) aufweist, das an dessen Vorderseite mit einem Endpaneel (5) abschließt, wobei die Wand (12) der Abdeckung (10) dazu ausgelegt ist, vor dem und in Kontakt mit dem Endpaneel (5) des Filterelements (1) angeordnet zu werden, und wobei der Stopfen (21) mit der Wand (12) der Abdeckung (10) als einstückiges Kunststoffteil ausgebildet ist.

2. Vorrichtung nach Anspruch 1, wobei der Stopfen (21) mittels eines beweglichen Scharniers (22) mit der Wand (12) der Abdeckung (10) verbunden ist.

3. Vorrichtung nach einem der vorangehenden Ansprüche, wobei mindestens eine Haltevorrichtung (15) an der Wand (12) ausgebildet ist und die Haltevorrichtung dazu ausgelegt ist, mit dem Endpaneel (5) des Filterelements (1) gekoppelt zu werden, um das Filterelement (1) gegen die Wand (12) der Abdeckung (10) zu drücken.

4. Vorrichtung nach Anspruch 3, wobei die mindestens eine Haltevorrichtung (15) einen zwischen der Wand (12) der Abdeckung (10) und der Haltevorrichtung (15) angeordneten Schlitz (16) definiert,
wobei der Schlitz (16) dazu ausgelegt ist, einen freien Rand (5a) des Endpaneels (5) des Filterelements (1) aufzunehmen, wobei der Schlitz (16) eine Mindestbreite (d) hat, die geringer ist als die Dicke (D) des Endpaneels (5) des Filterelements (1),
wobei die mindestens eine Haltevorrichtung (15) als elastisch verformbarer Clip ausgebildet ist, der so ausgestaltet ist, dass er eine elastische Haltekraft auf das Endpaneel (5) des Filterelements (1) ausübt.

5. Vorrichtung nach Anspruch 4, wobei die mindestens eine Haltevorrichtung (15) mit der Wand (12) der Abdeckung (10) als einstückiges Kunststoffteil ausgebildet ist.

## Revendications

1. Ensemble comportant
un élément filtrant (1) et
un couvercle (10) configuré pour être fixé de manière amovible à un boîtier de filtre (11) adapté pour recevoir l'élément filtrant (1), ledit couvercle comprenant une paroi (12),
dans lequel un trou d'inspection (20) est formé sur ladite paroi (12) pour permettre de détecter la présence de l'élément filtrant (1), le couvercle (10) comprenant en outre un bouchon (21) pour fermer le trou d'inspection (20),
l'ensemble étant **caractérisé en ce que** l'élément filtrant (1) comprend une bande filtrante pliée en zigzag (2) qui se termine à l'avant par un panneau d'extrémité (5), dans lequel la paroi (12) du couvercle (10) est adaptée pour être placée devant le panneau d'extrémité (5) de l'élément filtrant (1), et en contact avec celui-ci, et dans lequel le bouchon (21) est formé sous forme d'une pièce unique de matière plastique avec la paroi (12) du couvercle (10).

2. Ensemble selon la revendication 1, dans lequel le bouchon (21) est relié à la paroi (12) du couvercle (10) au moyen d'une charnière mobile (22).

3. Ensemble selon l'une quelconque des revendications précédentes, dans lequel au moins une formation de maintien (15) est formée sur ladite paroi (12), laquelle formation est adaptée pour être couplée au panneau d'extrémité (5) de l'élément filtrant (1) pour maintenir l'élément filtrant (1) contre la paroi (12) du couvercle (10).

4. Ensemble selon la revendication 3, dans lequel ladite au moins une formation de maintien (15) définit une fente (16) positionnée entre la paroi (12) du couvercle (10) et la formation de maintien (15),
dans lequel la fente (16) est adaptée pour recevoir un bord libre (5a) du panneau d'extrémité (5) de l'élément filtrant (1), la fente (16) ayant une largeur minimale (d) inférieure à l'épaisseur (D) du panneau d'extrémité (5) de l'élément filtrant (1),
dans lequel ladite au moins une formation de maintien (15) est formée sous forme d'une pince élastiquement déformable configurée pour exercer une force de maintien élastique sur le panneau d'extrémité (5) de l'élément filtrant (1).

5. Ensemble selon la revendication 4, dans lequel ladite au moins une formation de maintien (15) est formée sous forme d'une pièce unique de matière plastique avec la paroi (12) du couvercle (10).
